# EUROPEAN PATENT APPLICATION

(11) **EP 3 525 495 A1**
(43) Date of publication of application: **14.08.2019**
(21) Application number: 16918642.6
(22) Date of filing: 10.10.2016
(51) Int. Cl.: H04W 4/12

(54) **METHOD FOR SENDING DOWNLINK DATA, NETWORK DEVICE AND USER PLANE DEVICE**

(71) Applicant: Huawei Technologies Co., Ltd., Longgang Shenzhen, Guangdong 518129 (CN)
(72) Inventor: WANG, Yuan, Shenzhen, Guangdong 518129 (CN); CHEN, Zhongping, Shenzhen, Guangdong 518129 (CN)
(74) Representative: Maiwald Patent- und Rechtsanwaltsgesellschaft mbH
(86) International application number: PCT/CN2016/101711
(87) International publication number: WO 2018/068188

(57) **Abstract**

The present invention discloses a downlink data sending method, to reduce power consumption of a terminal device. The method includes: receiving, by a first network device, a first message sent by a terminal device, where the first message carries identification information of the terminal device; determining, by the first network device based on the identification information, that a network side has buffered downlink data for the terminal device; obtaining, by the first network device, the downlink data; and sending, by the first network device, the downlink data to the terminal device.

## Description

### TECHNICAL FIELD

The present invention relates to the communications field, and more specifically, relates to a downlink data sending method, a network device, and a user plane device.

### BACKGROUND

Machine type communication (Machine Type Communication, MTC) is machine-to-machine (Machine to Machine) communication performed on a cellular network to transmit data. Different from a user of a conventional mobile phone, a terminal for machine type communication is usually a sensing device of various types of information. A common feature of this type of device is that the device is small in size and needs to be powered by a battery of the device to periodically report collected data. Because devices of this type are usually deployed in a large scale with high density, it is difficult to reclaim and recharge the devices. Therefore, performance and lifespans of the devices of this type are directly limited by batteries of the devices. How to reduce energy consumption and prolong a lifespan of a machine-type terminal device is a problem that needs to be urgently resolved in a future communications network (for example, 5G).

In the prior art, a network side transmits downlink data to a machine-type terminal device through paging and user plane buffering. To be specific, when downlink data for a terminal device arrives at a user plane device of the network side, the downlink data is first buffered in the user plane device. In addition, the user plane device triggers the control plane device of the network side to initiate a paging procedure for the terminal device. After the terminal device accesses the network, the user plane device sends the buffered data to the terminal device. The network side initiates a paging procedure for the terminal device, to request the terminal device to perform a tracking area update (Tracking Area updating, TAU) procedure or a periodic TAU procedure, so as to ensure reachability of the terminal device.

However, when the terminal device performs the TAU procedure or the periodic TAU procedure, power consumption of the terminal device is increased.

### SUMMARY

This application provides a downlink data sending method, a network device, a user plane device, to reduce power consumption of a terminal device.

According to a first aspect, this application provides a downlink data sending method, and the method includes: receiving, by a first network device, a first message sent by a terminal device, where the first message carries identification information of the terminal device; determining, by the first network device based on the identification information, that a network side has buffered downlink data for the terminal device; obtaining, by the first network device, the downlink data; and sending, by the first network device, the downlink data to the terminal device.

It should be noted that the first network device in this embodiment of the present invention is a control plane device. For example, the first network device may be a control plane entity (Control Plane Entity, CPE). The CPE may be a physical network element, for example, a mobility management entity (Mobility Management Entity, MME) or a serving GPRS support node (Serving GPRS Support Node, SGSN). The CPE may alternatively be a virtual machine, a software program package, or the like. This is not specially limited in this embodiment of the present invention.

In addition, the first network device sends the buffered downlink data to the terminal device by using control plane signaling.

In a possible implementation, the identification information is a temporary identity of the terminal device, the temporary identity includes a device identity of a second network device, and the obtaining, by the first network device, the downlink data includes: sending, by the first network device, a context request message to the second network device based on the device identity; receiving, by the first network device, a response message that is for the context request message and that is sent by the second network device, where the response message carries the downlink data; and obtaining, by the first network device, the downlink data from the response message.

Similarly, the second network device in this embodiment of the present invention is a control plane device. For example, the second network device may be a CPE. Similarly, the CPE may be an MME, an SGSN, a virtual machine, a software program package, or the like.

In a possible implementation, the identification information is a temporary identity of the terminal device, the temporary identity includes a device identity of a second network device, the downlink data is buffered in a user plane device shared by the first network device and the second network device, and the obtaining, by the first network device, the downlink data includes: sending, by the first network device, a context request message to the second network device based on the device identity; receiving, by the first network device, a response message that is for the context request message and that is sent by the second network device, where the response message carries first indication information, and the first indication information is used to indicate that the network side has the buffered downlink data for the terminal device; and obtaining, by the first network device based on the first indication information, the downlink data from the user plane device shared by the first network device and the second network device.

The user plane device herein may be a physical network element, for example, a serving gateway (Serving GateWay, S-GW) or a packet data network (Packet Data Network, PDN) gateway (PDN GateWay, P-GW). Alternatively, the user plane device may be a virtual machine, a software program package, or the like. This is not specially limited in this embodiment of the present invention.

It should be understood that in embodiments of the present invention, the temporary identity of the terminal device has a plurality of forms. For example, the temporary identity may be a globally unique temporary identity (Globally Unique Temporary UE Identity, GUTI), an Internet Protocol (Internet Protocol, IP) address of UE, or a cell radio network temporary identity (Cell Radio Network Temporary identity, C-RNTI).

In a possible implementation, the identification information is a permanent identity of the terminal device, and the obtaining, by the first network device, the downlink data includes: sending, by the first network device, a location update request message to a subscriber data management; receiving, by the first network device, second indication information and a device identity that are sent by the subscriber data management, where the second indication information is used to indicate that a second network device identified by the device identity has the buffered downlink data for the terminal device; and obtaining, by the first network device, the downlink data from the second network device based on the device identity.

It should be understood that the permanent identity of the terminal device has a plurality of forms. For example, the permanent identity may be an international mobile subscriber identity (International Mobile Subscriber Identity, IMSI) or an international mobile equipment identity (International Mobile Equipment Identity, IMEI). This is not limited in this embodiment of the present invention.

It should be understood that the subscriber data management (Subscriber Data Management, SDM) is a network function entity that provides subscription data for UE, for example, a home subscriber server (Home Subscriber Server, HSS) in an evolved packet core (Evolved Packet Core, EPC).

Optionally, in an embodiment, before the receiving, by a first network device, a first message sent by a terminal device, the method further includes: receiving, by the first network device, the downlink data sent by a first user plane device, where the first user plane device is a user plane device exclusive to the first network device; and buffering, by the first network device, the downlink data when the first network device determines that the terminal device is currently unreachable.

According to a second aspect, this application provides a downlink data sending method, and the method includes: receiving, by a second network device, a context request message sent by a first network device, where the context request message carries identification information of a terminal device, and the identification information carries a device identity of the second network device; and sending, by the second network device, a response message for the context request message to the first network device, where the response message is used by the first network device to obtain the downlink data.

In this embodiment of the present invention, the first network device and the second network device each are a control plane device. .

It should be noted that the first network device in this embodiment of the present invention is a control plane device of a current core network during movement of UE, and the second network device is a control plane device of an original core network.

In a possible implementation, the downlink data is buffered in the second network device, and the response message carries the downlink data, so that the first network device obtains the downlink data from the response message.

In a possible implementation, the downlink data is buffered in a user plane device of the second network device, and before the sending, by the second network device, a response message to the first network device, the method further includes: obtaining, by the second network device, the downlink data from the user plane device.

In a possible implementation, the response message carries first indication information, and the first indication information is used to indicate that the downlink data is buffered in a user plane device shared by the first network device and the second network device, so that the first network device obtains, based on the first indication information, the downlink data from the user plane device shared by the first network device and the second network device, and sends the downlink data to the terminal device.

In a possible implementation, the method further includes: receiving, by the second network device, a registration request of the terminal device, where the registration request is used by the terminal device to request to register with a core network to which the second network device belongs, and the registration request carries type information of the terminal device and/or a service type requested by the terminal device; generating, by the second network device, a buffer policy based on the type information of the terminal device and/or the service type requested by the terminal device; and when the second network device receives the downlink data for the terminal device, buffering, by the second network device, the downlink data according to the buffer policy.

According to a third aspect, this application provides a downlink data sending method, and the method includes: receiving, by a first user plane device, a data forwarding tunnel establishment request sent by a first network device, where the data forwarding tunnel establishment request is sent by the first network device to the first user plane device after the first network device receives first indication information sent by a second network device, and the first indication information is used to indicate that a network side has buffered downlink data for a terminal device; establishing, by the first user plane device, a data forwarding tunnel, and sending a tunnel identifier of the data forwarding tunnel to the first network device, so that the first network device sends the tunnel identifier to the second network device, and the second network device sends the tunnel identifier to a second user plane device, where the second user plane device is a user plane device exclusive to the second network device; receiving, by the first user plane device, the downlink data sent by the second user plane device by using the data forwarding tunnel; and sending, by the first user plane device, the downlink data to the terminal device.

According to a fourth aspect, this application provides a downlink data sending method, and the method includes: receiving, by a second user plane device, a tunnel identifier sent by a second network device, where the tunnel identifier is sent by a first network device to the second network device after the second network device sends first indication information to the first network device, the first indication information is used to indicate that a network side has buffered downlink data for a terminal device, the tunnel identifier is used to identify a data forwarding tunnel established by a first user plane device, the data forwarding tunnel is used to forward the downlink data for the terminal device that is buffered on the network side, and the first user plane device is a user plane device exclusive to the first network device; and sending, by the second user plane device, the downlink data to the first user plane device by using the data forwarding tunnel, so that the first user plane device sends the downlink data to the terminal device.

According to a fifth aspect, this application provides a network device, configured to perform the method in the first aspect or any possible implementation of the first aspect. Specifically, the network device includes a unit configured to perform the method in the first aspect or any possible implementation of the first aspect.

According to a sixth aspect, this application provides a network device, configured to perform the method in the second aspect or any possible implementation of the second aspect. Specifically, the network device includes a unit configured to perform the method in the second aspect or any possible implementation of the second aspect.

According to a seventh aspect, this application provides a user plane device, configured to perform the method in the third aspect. Specifically, the user plane device includes a unit configured to perform the method in the third aspect.

According to an eighth aspect, this application provides a user plane device, configured to perform the method in the fourth aspect. Specifically, the user plane device includes a unit configured to perform the method in the fourth aspect.

According to a ninth aspect, this application provides a network device, and the network device includes a processor and a memory. The memory is configured to store a computer program, and the processor is configured to invoke the computer program from the memory and execute the computer program. When the program runs, the network device performs the method in the first aspect or any possible implementation of the first aspect.

According to a tenth aspect, this application provides a network device, and the network device includes a processor and a memory. The memory is configured to store a computer program, and the processor is configured to invoke the computer program from the memory and execute the computer program. When the program runs, the network device performs the method in the second aspect or any possible implementation of the second aspect.

According to an eleventh aspect, this application provides a user plane device, and the user plane device includes a processor and a memory. The memory is configured to store a computer program, and the processor is configured to invoke the computer program from the memory and execute the computer program. When the program runs, the user plane device performs the method in the third aspect.

According to a twelfth aspect, this application provides a user plane device, and the user plane device includes a processor and a memory. The memory is configured to store a computer program, and the processor is configured to invoke the computer program from the memory and execute the computer program. When the program runs, the user plane device performs the method in the fourth aspect.

According to a thirteenth aspect, this application provides a computer readable medium, configured to store a computer program, where the computer program includes an instruction used to perform the method in the first aspect or any possible implementation of the first aspect.

According to a fourteenth aspect, this application provides a computer readable medium, configured to store a computer program, where the computer program includes an instruction used to perform the method in the second aspect or any possible implementation of the second aspect.

According to a fifteenth aspect, this application provides a computer readable medium, configured to store a computer program, where the computer program includes an instruction used to perform the method in the third aspect.

According to a sixteenth aspect, this application provides a computer readable medium, configured to store a computer program, where the computer program includes an instruction used to perform the method in the fourth aspect or any possible implementation of the fourth aspect.

According to the downlink data sending method in the embodiments of the present invention, when determining, by using the identification information of the terminal device, that the network side has the buffered downlink data for the terminal device, the first network device obtains the downlink data and sends the downlink data to the terminal device. In this way, the terminal device no longer needs to initiate a TAU procedure to receive the downlink data buffered on the network side, so as to reduce a signaling procedure of the terminal device, thereby reducing energy consumption of the terminal device.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may derive other drawings from these accompanying drawings without creative efforts.
FIG. 1 is an architectural diagram of a downlink data sending method applicable to an embodiment of the present invention;
FIG. 2 is a schematic diagram of a computer device (or system) 200 according to an embodiment of the present invention;
FIG. 3 is a flowchart of a downlink data sending method 300 according to an embodiment of the present invention;
FIG. 4 is a flowchart of a downlink data sending method 400 according to another embodiment of the present invention;
FIG. 5 is a schematic interaction diagram of a downlink data sending method according to an embodiment of the present invention;
FIG. 6 is a schematic interaction diagram of a downlink data sending method according to another embodiment of the present invention;
FIG. 7 is a schematic interaction diagram of downlink data sending according to still another embodiment of the present invention;
FIG. 8 is a schematic block diagram of a network device 800 according to an embodiment of the present invention;
FIG. 9 is a schematic block diagram of a network device 900 according to another embodiment of the present invention;
FIG. 10 is a schematic block diagram of a user plane device 1000 according to an embodiment of the present invention; and
FIG. 11 is a schematic block diagram of a user plane device 2000 according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some rather than all of the embodiments of the present invention. All other embodiments obtained by a person of ordinary skill in the art based on the embodiments of the present invention without creative efforts shall fall within the protection scope of the present invention.

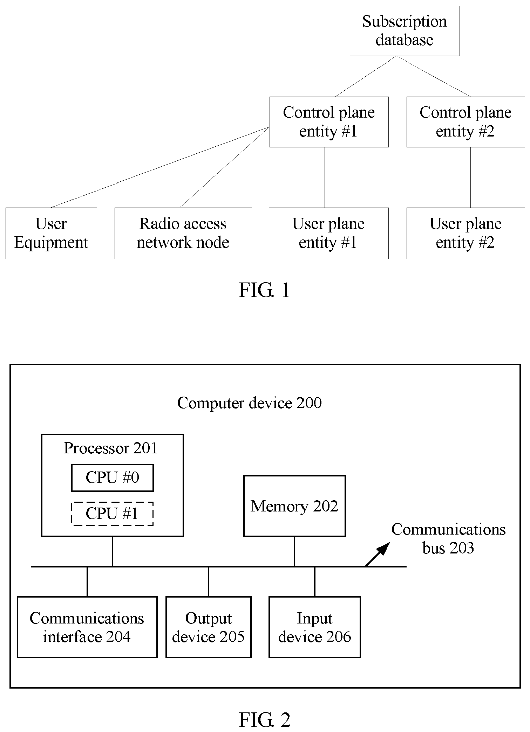

FIG. 1 is an architectural diagram of a downlink data sending method applicable to an embodiment of the present invention. As shown in FIG. 1, a system includes a subscriber data management, a control plane entity #1, a control plane entity #2, a user plane entity #1, a user plane entity #2, a radio access network node, and user equipment.

For ease of understanding, the network elements in this embodiment of the present invention are first described.

The subscriber data management (Subscriber Data Management, SDM) is a network function entity that provides subscription data for UE in a 3GPP communications system, for example, an HSS in an EPC network.

The control plane entity (Control Plane Entity, CPE) is an entity that provides a control plane network function in a 3rd Generation Partnership Project (3rd Generation Partnership Project, 3GPP) communications system. The control plane entity is responsible for executing the control plane network function and communicating with another external entity or another network function entity through a defined interface. The control plane entity may be a physical network element, for example, a mobility management entity (Mobility Management Entity, MME) or an SGSN; or may be a virtual machine or even a software program package.

The user plane entity (User Plane Entity, UPE) is an entity that provides a user plane network function in a 3GPP communications system. The entity is responsible for executing the user plane network function and communicating with another external entity or another network function entity through a defined interface. The user plane entity may be a physical network element, for example, an S-GW or a P-GW; or may be a virtual machine or even a software program package.

The radio access network (Radio Access Network, RAN) node may be a base station, a distributed base station, a cloud radio access network (Cloud RAN, CRAN) device, or an access network device that includes a radio access network controller and a base station. The base station may be a conventional 2G, 3G, or 4G base station, or may be a future base station that supports a 5G technology.

It should be understood that a terminal device described in this embodiment of the present invention may also be referred to as user equipment (User Equipment, UE), a terminal (Terminal), mobile user equipment, or the like. The terminal device may communicate with one or more core networks through a radio access network (for example, Radio Access Network, RAN). The terminal device may be a mobile terminal, for example, a mobile phone (or referred to as a "cellular" phone), and a computer that has a mobile terminal. For example, the terminal device may be a portable, pocket-size, handheld, computer built-in, or in-vehicle mobile apparatus, which exchanges voice and/or data with the radio access network. In this embodiment of the present invention, the terminal device includes a mobile phone, an information sensing device, an intelligent terminal (a wearable device, a smartwatch, a smart meter, a smart water meter, or the like), a multimedia device, a streaming device, and the like.

As shown in FIG. 1, the control plane entity #1 is a control plane network device of a core network currently accessed by the user equipment. The control plane entity #2 is a control plane network device of an original core network of the user equipment. Correspondingly, the user plane entity #1 is a user plane network device of the currently accessed core network. The user plane entity #2 is a user plane network device of the original core network. Downlink data for the user equipment that is obtained by the control plane entity #1 or the user plane entity #1 is delivered to the user equipment by using the radio access network node.

It should be noted that the subscriber data management, the control plane entity #1, the control plane entity #2, the user plane entity #1, the user plane entity #2, the radio access network node, and the user equipment that are shown in FIG. 1 may be implemented by a computer device (or system) 200 shown in FIG. 2.

FIG. 2 is a schematic diagram of a computer device (or system) 200 according to an embodiment of the present invention. The computer device 200 includes at least one processor 201, a memory 202, a communications bus 203, and at least one communications interface 204.

The processor 201 may be a central processing unit (CPU), a microprocessor, an application-specific integrated circuit (application-specific integrated circuit, ASIC), or one or more integrated circuits configured to control program execution of the solutions of the present invention.

The memory 202 may be a read-only memory (Read-Only Memory, ROM) or another type of static storage device capable of storing static information and instructions, or a random access memory (Random Access Memory, RAM) or another type of dynamic storage device capable of storing information and instructions; or may be an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compressed optical disc, a laser disc, an optical disc, a digital versatile disc, a Blu-ray disc, and the like), a magnetic disk storage medium or another magnetic storage device, or any other medium capable of carrying or storing expected program code in a form of an instruction or a data structure and capable of being accessed by a computer. However, the memory is not limited thereto. The memory may exist independently and is connected to the processor by using the communications bus 203. The memory may alternatively be integrated with the processor.

The memory 202 is configured to store application program code for executing the solutions of the present invention, and the processor 201 is configured to execute the application program code stored in the memory 202.

In specific implementation, in an embodiment, the processor 201 may include one or more CPUs. For example, the processor 201 shown in FIG. 2 includes a CPU #0 and a CPU #1.

In specific implementation, in an embodiment, the computer device 200 may include a plurality of processors, and each processor may be a single-core (single-CPU) processor, or may be a multi-core (multi-CPU) processor. The processor herein may be one or more devices, circuits, and/or processing cores configured to process data (for example, a computer program instruction).

In specific implementation, in an embodiment, the computer device 200 may further include an output device 205 and an input device 206. The output device 205 communicates with the processor 201, and may display information in a plurality of manners. For example, the output device 205 may be a liquid crystal display (liquid crystal display, LCD), a light emitting diode (light emitting diode, LED) display device, a cathode ray tube (cathode ray tube, CRT) display device, or a projector (projector). The input device 206 communicates with the processor 201, and may receive user input in a plurality of manners. For example, the input device may be a mouse, a keyboard, a touchscreen device, a sensing device, or the like.

The computer device 200 may be a general-purpose computer device or a dedicated computer device. In specific implementation, the computer device 200 may be a desktop computer, a portable computer, a network server, a palmtop computer (Personal Digital Assistant, PDA), a mobile phone, a tablet computer, a wireless terminal device, a communications device, an embedded device, or a device having a structure similar to that in FIG. 2. A type of the computer device 200 is not limited in this embodiment of the present invention.

For ease of understanding and description, the following uses the architecture shown in FIG. 1 as an example, and a CPE #1 as an example of a first network device to describe a downlink data sending method in the embodiments of the present invention.

It should be understood that in the embodiments of the present invention, numbers "first" and "second" are merely intended to distinguish between different objects, for example, to distinguish between different indication information, and shall not be construed as any limitation to the protection scope of the embodiments of the present invention.

It should be further understood that steps or operations shown in methods in the following embodiments are merely examples, and other operations or variations of various operations may be performed. In addition, in specific implementation, the steps may be performed in a sequence different from that in the embodiments of the present invention, and it is possible that not all operations or steps shown in the embodiments of the present invention are performed. Alternatively, more operations or steps than those shown in the embodiments of the present invention may be performed.

For ease of understanding and description, the following uses UE #1 as only an example of a terminal device, a CPE #1 as only an example of a first network device, a CPE #2 as only an example of a second network device, a UPE #1 as only an example of a first user plane device, and a UPE #2 as only an example of a second network device, to describe in detail the downlink data sending method in the embodiments of the present invention.

It should be understood that the first network device (for example, the CPE #1 in the following embodiment) in the embodiments of the present invention is a control plane device of a core network currently accessed by UE during movement of the UE, and the second network device (for example, the CPE #2 in the following embodiment) is a control plane device of an original core network during movement of the UE.

Similarly, the first user plane device (for example, the UPE #1 in the following embodiment) is a user plane device of the currently accessed core network, and the second user plane device (for example, the UPE #2 in the following embodiment) is a user plane device of the original core network.

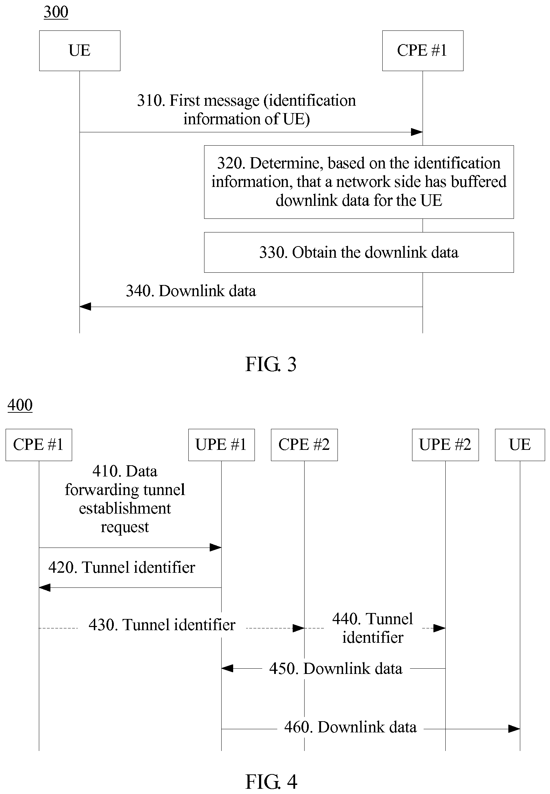

FIG. 3 is a schematic flowchart of a downlink data sending method 300 according to an embodiment of the present invention. As shown in FIG. 3, the method 300 mainly includes steps 310 to 340.

310. UE #1 sends a first message to a CPE #1, and the CPE #1 receives the first message sent by the UE #1.

The first message carries identification information of the UE #1.

It should be noted that the first message may be an attach request message, an uplink data sending request message, or the like. The uplink data sending request message is used to indicate that the UE #1 has uplink data that needs to be sent. Specifically, for a process in which the UE #1 sends the attach request message or the uplink data sending request message to the CPE #1, refer to the prior art. Details are not described herein.

Different from the prior art, the attach request message or the uplink data sending request message carries the identification information of the UE #1.

Specifically, the identification information herein may be a temporary identity of the UE #1, for example, a globally unique temporary identity (Globally Unique Temporary UE Identity, GUTI); or may be a permanent identity of the UE #1, for example, an international mobile subscriber identity (International Mobile Subscriber Identity, IMSI). Detailed descriptions are provided below with reference to a specific embodiment.

320. The CPE #1 determines, based on the identification information, that a network side has buffered downlink data for the UE #1.

Specifically, the CPE #1 can learn, based on the identification information of the UE #1, whether the buffered downlink data for the UE #1 is buffered on the network side, and perform subsequent steps 330 and 340 when determining that the network side has the buffered downlink data for the UE #1.

330. The CPE #1 obtains the downlink data.

Specifically, in this embodiment of the present invention, the CPE #1 obtains the buffered downlink data for the UE #1 in a different manner, depending on a different location at which the downlink data is buffered on the network side.

### Manner 1

The downlink data is locally buffered in the CPE #1.

Optionally, in an embodiment, before the CPE #1 receives the first message sent by the UE #1, the method further includes the following:
the CPE #1 receives the downlink data sent by a UPE #1, where the UPE #1 is a user plane device exclusive to the CPE #1; and
the CPE #1 buffers the downlink data when the CPE #1 determines that the UE #1 is currently unreachable.

In Manner 1, because the downlink data is locally buffered in the CPE #1, the CPE #1 can directly send the buffered downlink data for the UE #1 to the UE #1.

It should be understood that, that the UE is currently unreachable means that the UE cannot be currently paged by the network side.

### Manner 2

The downlink data is locally buffered in a CPE #2.

Optionally, in an embodiment, the identification information is a temporary identity of the UE #1, and the temporary identity includes a device identity of the CPE #2.

That the CPE #1 obtains the downlink data includes the following:
the CPE #1 sends a context request message to the CPE #2 based on the device identity;
the CPE #1 receives a response message that is for the context request message and that is sent by the CPE #2, where the response message carries the downlink data; and
the CPE #1 obtains downlink data from the response message.

In Manner 2, the identification information of the UE #1 is the temporary identity (for example, a GUTI), and the temporary identity includes the identity (Identity, ID) of the CPE #2. In this way, the CPE #1 obtains the ID of the CPE #2 from the temporary identity, and sends the context request message to the CPE #2.

It can be understood that the context request message is used by the CPE #1 to request and obtain context of the UE #1 from the CPE #2.

Because the downlink data for the UE #1 is locally buffered in the CPE #2, the CPE #2 may add the downlink data to the response message for the context request message and sends the response message to the CPE #1. Therefore, the CPE #1 may obtain the downlink data for the UE #1 from the response message.

### Manner 3

The downlink data is buffered in a user plane device UPE #1 shared by the CPE #1 and a CPE #2.

Optionally, in an embodiment, the identification information is a temporary identity of the UE #1, and the temporary identity includes a device identity of the CPE #2.

That the CPE #1 obtains the downlink data includes the following:
the CPE #1 sends a context request message to the CPE #2 based on the device identity;
the CPE #1 receive a response message that is for the context request message and that is sent by the CPE #2, where the response message carries first indication information, and the first indication information is used to indicate that the network side has the buffered downlink data for the UE #1; and
the CPE #1 obtains, based on the first indication information, the downlink data from the user plane device shared by the CPE #1 and the CPE #2.

Specifically, in Manner 3, the downlink data for the UE #1 is buffered in the user plane device shared by the CPE #1 and the CPE #2. Different from the Manner 2, the CPE #2 adds the indication information to the response message sent to the CPE #1, to notify the CPE #1 that the network side has the buffered downlink data for the UE #1. Therefore, the CPE #1 may obtain the downlink data for the UE #1 from the shared user plane device.

### Manner 4

The downlink data is buffered in a user plane device UPE #2 exclusive to a CPE #2.

Manner 4 is described below in detail with reference to FIG. 4.

340. The CPE #1 sends the downlink data to the UE #1.

By using the foregoing steps, the CPE #1 can correspondingly obtain the buffered downlink data for the UE #1 in a different obtaining manner, depending on a different specific location at which the downlink data for the UE #1 is buffered on the network side, and send the obtained buffered downlink data for the UE #1 to the UE #1.

In the prior art, when obtaining the downlink data buffered on the network side in a movement scenario, UE needs to initiate a TAU procedure (based on a trigger or a period) to the network side. However, the TAU procedure significantly increases power consumption of the UE. This is specifically as follows: (1) The UE needs to be frequently woken up during movement to perform the TAU procedure. (2) When the UE performs the TAU procedure, a data reporting period may have not reached. In this case, the UE does not have uplink data to be sent, but still needs to perform the TAU procedure. After the TAU procedure ends, if the data reporting period reaches for the UE, the UE needs to further initiate a request for connecting to the network side. (3) To enable the UE to trigger the TAU procedure when the UE moves cross a tracking area list (Tracking Area list, TA list), the UE needs to always monitor a broadcast channel to determine whether the UE moves out of the TA list.

In this embodiment of the present invention, when determining, based on identification information of a terminal device, that the network side has buffered downlink data for the terminal device, a network device obtains the downlink data and sends the downlink data to the terminal device. The terminal device no longer needs to receive, by initiating a TAU procedure, the downlink data buffered on the network side, so as to reduce power consumption of the terminal device.

FIG. 4 is a schematic flowchart of a downlink data sending method 400 according to another embodiment of the present invention.

410. A CPE #1 sends a data forwarding tunnel establishment request to a UPE #1, and the UPE #1 receives the data forwarding tunnel establishment request sent by the CPE #1.

It should be noted that the data forwarding tunnel establishment request herein is sent by the CPE #1 to the UPE #1 after the CPE #1 receives indication information that is sent by a CPE #2 and that indicates that a network side has buffered downlink data for UE #1.

420. The UPE #1 establishes a data forwarding tunnel, and sends a tunnel identifier of the data forwarding tunnel to the CPE #1.

S430 to S440. The CPE #1 sends the tunnel identifier to a CPE #2, the CPE #2 sends the tunnel identifier to a UPE #2, and the UPE #2 receives the tunnel identifier sent by the CPE #2.

450. The UPE #2 modifies the tunnel identifier, and after completing establishment of the data forwarding tunnel, sends the downlink data to the UPE #1 by using the data forwarding tunnel; and the UPE #1 receives the downlink data sent by the UPE #2.

It should be understood that in step 450, that the UPE #2 modifies the tunnel identifier means that the UPE #2 modifies the tunnel identifier on an original side.

460. The UPE #1 sends the downlink data to UE #1.

The downlink data sending method 400 in this embodiment of the present invention is corresponding to Manner 4. In Manner 4, the downlink data for the UE #1 that is buffered in the UPE #2 is data that is not suitable for transmission on a signaling plane but is suitable for transmission on a user plane due to factors such as bandwidth and quality of service. Therefore, a data forwarding tunnel needs to be established between a user plane device of an original core network and a user plane device of a currently accessed core network, to forward the downlink data.

In the foregoing embodiment, the identification information of the UE #1 is a temporary identity. The following describes the downlink data sending method in this embodiment of the present invention when the identification information of the UE #1 is a permanent identity.

Optionally, in an embodiment, the identification information is a permanent identity of the UE #1, and that the CPE #1 obtains the downlink data includes the following:
the CPE #1 sends a location update request message to SDM;
CPE #1 receives second indication information and a device identity that are sent by the SDM, where the second indication information is used to indicate that a CPE #2 identified by the device identity buffers the downlink data for the UE #1; and
the CPE #1 obtains the downlink data from the CPE #2 based on the device identity.

In this embodiment, in a silent state (for example, in a power saving mode), the UE may delete context stored in the UE. When registering with a network, the UE always provides the permanent identity instead of the temporary identity of the UE. Alternatively, the temporary identity may be invalid.

If the UE uses the permanent identity to register with the network, the CPE #1 cannot find the CPE #2. In this case, a subscriber data management SDM of the UE is required to assist in completing a process of delivering buffered data.

When the UE #1 is currently unreachable, a core network buffers the downlink data for the UE #1, and notifies the SDM that the downlink data for the UE is waiting. Then, in a process in which the UE #1 accesses a target core network by using the permanent identity (for example, an IMSI), when the target core network requests the SDM to update a location of the UE #1, the SDM notifies the target core network that the downlink data for UE #1 is waiting, and sends an identity of a control plane device (that is, the CPE #2) of an original core network to the target core network. The target core network interacts with the original core network to obtain the buffered downlink data, and the target core network forwards the buffered downlink data to the UE #1.

It should be understood that after obtaining the identity of the control plane device of the original core network, the target core network may obtain the buffered data for the UE #1 by using the method described in any one of the foregoing embodiments, and send the buffered data to the UE #1.

It should be further understood that in this embodiment of the present invention, that the UE is unreachable means that the UE cannot be paged by the network side, and therefore cannot receive data sent by the network side.

Optionally, in an embodiment, the method further includes the following:
the CPE #2 receives a registration request of the UE #1, where the registration request is used by the UE #1 to request to register with a core network to which the CPE #2 belongs, and the registration request carries type information of the UE #1 and/or a service type requested by the UE #1;
the CPE #2 generates a buffer policy based on the type information of the UE #1 and/or the service type requested by the UE #1; and
when the CPE #2 receives the downlink data for the UE #1, the CPE #2 buffers the downlink data according to the buffer policy.

It should be understood that a premise in the foregoing embodiments is that downlink data for UE is buffered on the network side. In this embodiment of the present invention, to reduce power consumption of machine-type UE, when the UE starts to register with a network, a CPE generates a buffer policy for the UE based on type information of the UE and/or a service requested by the UE, and stores buffered data in context of the UE. When downlink data for the UE arrives, the CPE determines, according to the buffer policy, whether the downlink data for the UE needs to be buffered, so as to reduce power consumption of the UE and prolong a lifespan. Alternatively, for example, when the UE is a terminal device of a non-machine type or has a relatively strong power supply capability, or when a service type requested by the UE has a relatively high requirement for real-time performance, according to the buffer policy, the CPE may directly initiate a paging procedure instead of buffering the downlink data for the UE. Compared with the prior art in which the network side directly initiates a paging procedure to UE when downlink data for the UE arrives, energy consumption of the UE can be reduced.

Herein, the type information of the UE #1 is used to indicate whether the UE #1 is a machine-type terminal.

It should be understood that a machine-type terminal is usually a sensing device for various types of information, for example, an infrared sensor, a laser scanner, a gas sensor, a temperature controller, and the like. A common characteristic of this type of device is that the device is small in size and needs to be powered by a battery of the device. Because devices of this type are usually deployed in a large scale with high density, it is difficult to reclaim and recharge the devices, and performance and lifespans of the devices are directly limited by batteries of the devices. Therefore, it is crucial to reduce energy consumption of the machine-type terminal.

For example, the CPE determines the buffer policy based on whether real-time performance needs to be ensured for the downlink data of the UE.

When the downlink data for the UE arrives, if the UE is currently unreachable, the CPE performs a corresponding procedure according to the buffer policy. For example, if real-time performance needs to be ensured for the downlink data of the UE, the CPE initiates paging, and sends the downlink data to the UE after paging the UE. If real-time performance does not need to be ensured for the downlink data of the UE, the CPE buffers the downlink data.

The downlink data may be subsequently sent to the UE in a plurality of manners provided in the embodiments of the present invention.

With reference to a plurality of embodiments, the downlink data sending method in the embodiments of the present invention in the foregoing manners (that is, Manner 1 to Manner 4) is described below by using an example.

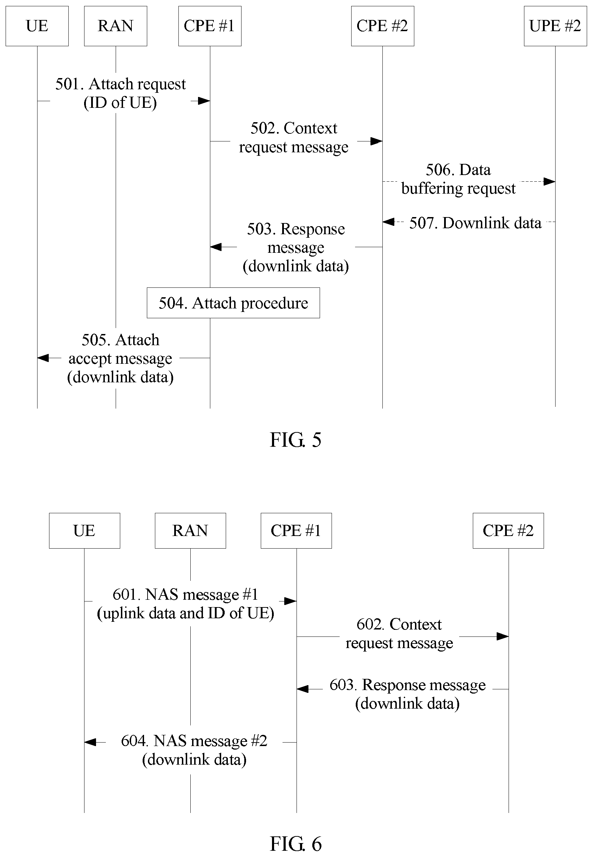

FIG. 5 is a schematic interaction diagram of a downlink data sending method according to an embodiment of the present invention. As shown in FIG. 5, this embodiment mainly includes steps 501 to 505.

501. UE #1 sends an attach request to a CPE #1, and the CPE #1 receives the attach request sent by the UE #1, where the attach request carries an ID of the UE #1.

Specifically, in this embodiment, the UE #1 initiates the attach request to the CPE #1 after moving, in a silent state (for example, in a power saving mode), to a service area of a CPE #2. For example, when the UE #1 has uplink data to be sent or periodic data to be reported, the UE #1 initiates an attach (Attach) procedure. For another example, the UE #1 first initiates a service request (Service request) procedure, and initiates an attach procedure to the CPE #1 after the service request procedure fails.

For specific processes of the attach procedure and the service request procedure, refer to the prior art. Details are not described herein.

When identification information of the UE #1 is a temporary identity, the temporary identity includes an ID of the CPE #2.

502. The CPE #1 sends a context request message to a CPE #2, and the CPE #2 receives the context request message sent by the CPE #1.

It can be understood that in step 501, the temporary identity of the UE #1 includes the ID of the CPE #2. Therefore, the CPE #1 may obtain the ID of the CPE #2 from the temporary identity, and sends the context request message to the CPE #2. The context request message is used by the CPE #1 to request context of the UE #1 from the CPE #2.

503. The CPE #2 sends a response message for the context request message to the CPE #1, and the CPE #1 receives the response message sent by the CPE #2, where the response message carries buffered downlink data for the UE #1.

To be specific, the CPE #2 sends, to the CPE #1 by using the response message, the context of the UE #1 and the downlink data for the UE #1 that is buffered when the UE is in the silent state.

504. The CPE #1 performs a subsequent attach procedure.

505. The CPE #1 sends an attach accept (Attach Accept) message to the UE #1, and the UE #1 receives the attach accept message sent by the CPE #1.

The attach accept message carries the buffered downlink data for the UE #1.

It should be noted that the downlink data in this embodiment of the present invention may be small packet data that is suitable for transmission through a signaling plane, for example, a short message service (Short Message Service, SMS). In this way, when the CPE #1 sends the context request message to the CPE #2, the CPE #2 may add the buffered downlink data for the UE #1 to the response message for the context request message and send the response message to the CPE #1, so that the CPE #1 sends the downlink data to the UE #1 by using the attach accept message.

Optionally, in this embodiment of the present invention, if the downlink data for the UE #1 is buffered in a user plane device UPE #2 exclusive to the CPE #2, step 506 and step 507 may be further included between steps 502 and 503.

506. The CPE #2 sends a data buffering request to the UPE #2, and the UPE #2 receives the buffer data request of the CPE #2.

Specifically, the data buffering request carries the temporary identity of the UE #1.

507. The UPE #2 sends the buffered downlink data for the UE #1 to the CPE #2 based on a temporary identity of the UE #1, and the CPE #2 receives the downlink data for the UE #1 that is sent by the UPE #2.

Subsequently, the CPE #2 adds the downlink data to the response message and sends the response message to the CPE #1, and the CPE #1 sends the downlink data to the UE #1.

FIG. 6 is a schematic interaction diagram of a downlink data sending method according to another embodiment of the present invention. As shown in FIG. 6, a procedure in this embodiment mainly includes steps 601 to 604.

601. UE #1 sends a non-access stratum (Non Access Stratum, NAS) message #1 to a CPE #1, and the CPE #1 receives the NAS message #1 sent by the UE #1.

Specifically, the NAS message #1 carries an ID of the UE #1 and uplink data (for example, small packet data that can be transmitted through a signaling plane) that is sent by the UE #1 to a network side.

602. The CPE #1 sends a context request message to a CPE #2, and the CPE #2 receives the context request message sent by the CPE #1.

603. The CPE #2 sends a response message for the context request message to the CPE #1, and the CPE #1 receives the response message sent by the CPE #2.

The response message carries context of the UE #1 and downlink data for the UE #1 that is buffered on the network side.

604. The CPE #1 sends a NAS message #2 to the UE #1, and the UE #1 receives the NAS message #2 sent by the CPE #1, where the NAS message #2 carries the downlink data.

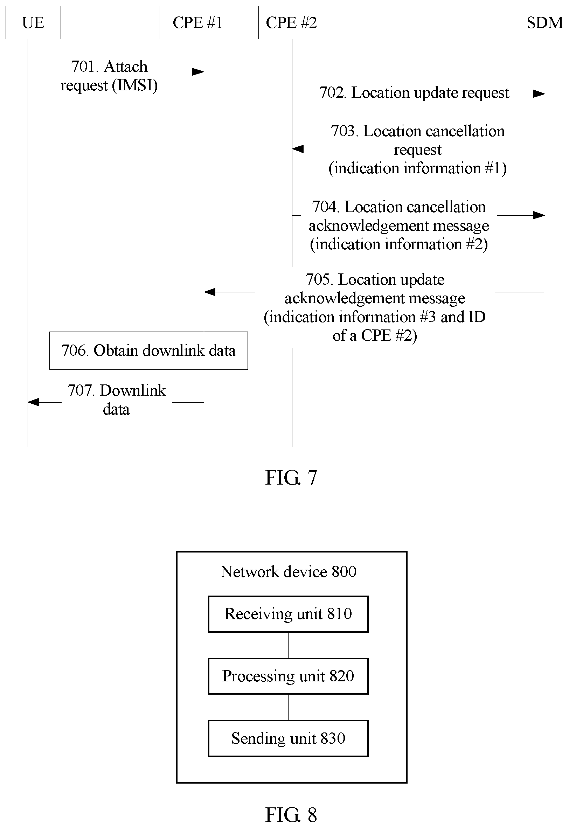

FIG. 7 is a schematic interaction diagram of downlink data sending according to still another embodiment of the present invention. As shown in FIG. 7, this embodiment mainly includes steps 701 to 707.

701. UE #1 sends an attach request to a CPE #1, and the CPE #1 receives the attach request sent by the UE #1.

Similar to the foregoing embodiment, the attach request carries a permanent identity (for example, an IMSI) of the UE #1.

702. The CPE #1 sends a location update request to an SDM, and the SDM receives the location update request sent by the CPE #1.

703. The SDM sends a location cancellation request to a CPE #2, and the CPE #2 receives the location cancellation request sent by the SDM.

The location cancellation request carries indication information #1, and the indication information #1 is used to instruct the CPE #2 to reserve buffered data for the UE #1.

It should be noted that in this embodiment, the SDM stores information indicating that there is buffered downlink data for the UE #1. The information is notified by the CPE #2 to the SDM in advance. Therefore, when the SDM receives the location update request sent by the CPE #1, the SDM adds the indication information #1 to the location cancellation request sent to the CPE #2 in step 703, to request (or instruct) the CPE #2 to reserve the buffered data for the UE #1, thereby ensuring that the buffered data for the UE #1 is not deleted by the CPE #2.

However, in the prior art, in step 703, the location cancellation request sent by the SDM to the CPE #2 carries no information similar to the indication information #1. In addition, the CPE #2 deletes, based on the received location cancellation request, all context of the UE #1, including the buffered data for the UE #1. Consequently, the buffered data for the UE #1 is lost and cannot be received by the UE #1.

704. The CPE #2 sends a location cancellation acknowledgement message to the SDM, and the SDM receives the location cancellation acknowledgement message sent by the CPE #2.

Specifically, the location cancellation acknowledgement message carries indication information #2. The indication information #2 is used to notify the SDM that the CPE #2 reserves the buffered data for the UE #1.

705. The SDM sends a response message for the location update request to the CPE #1, and the CPE #1 receives the response message sent by the SDM.

The response message carries indication information #3. The indication information #3 is used to notify the CPE #1 that a network side has the buffered data for the UE #1.

In addition, the response message further carries an ID of the CPE #2.

Therefore, the CPE #1 obtains the ID of the CPE #2 from the response message, and performs steps 706 and 707.

706. The CPE #1 obtains buffered downlink data for the UE #1 from the CPE #2.

It should be noted that in step 706, the CPE #1 may obtain the downlink data for the UE #1 in any manner in the foregoing embodiment based on the obtained ID of the CPE #2. This is not limited in this embodiment of the present invention.

707. The CPE #1 sends the buffered downlink data to the UE #1.

In this embodiment, when the UE does not provide a temporary identity or a temporary identity is invalid, it can still be ensured that a CPE of a target core network finds a CPE of an original core network, and obtains buffered data for the UE, thereby improving reliability of delivering the buffered data to the UE by the network side.

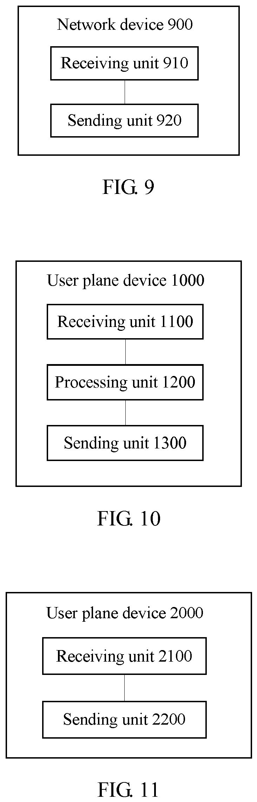

The downlink data sending methods provided in the embodiments of the present invention are described above in detail with reference to FIG. 1 to FIG. 7. A first network device and a second network device in the embodiments of the present invention are described below with reference to FIG. 8 and FIG. 9.

FIG. 8 is a schematic block diagram of a network device 800 according to an embodiment of the present invention. As shown in FIG. 8, the network device 800 includes:
a receiving unit 810, configured to receive a first message sent by a terminal device, where the first message carries identification information of the terminal device;
a processing unit 820, configured to determine, based on the identification information, that a network side has buffered downlink data for the terminal device, where
the processing unit 820 is further configured to obtain the downlink data; and
a sending unit 830, configured to send the downlink data to the terminal device.

The network device 800 provided in this embodiment of the present invention may be corresponding to the first network device described in the method 300. In addition, the modules or units in the network device 800 are respectively configured to perform the corresponding procedures performed by the first network device in the method 300. For brevity, details are not described herein again.

It should be understood that in this embodiment, the network device 800 is presented in a form of a functional unit. The "unit" herein may be an application-specific integrated circuit (application-specific integrated circuit, ASIC), a circuit, a processor and a memory that execute one or more software or firmware programs, an integrated logic circuit, and/or another component that can provide the foregoing functions. In a simple embodiment, a person skilled in the art may figure out that the network device 800 may be in a form shown in FIG. 2. The receiving unit 810, the processing unit 820, and the sending unit 830 may be implemented by using the processor and the memory in FIG. 2. Specifically, the processor executes a computer program stored in the memory to implement a function of the processor.

FIG. 9 is a schematic block diagram of a network device 900 according to another embodiment of the present invention. As shown in FIG. 9, the network device 900 includes:
a receiving unit 910, configured to receive a context request message sent by a first network device, where the context request message is sent by the first network device to the network device after the first network device receives identification information of a terminal device and determines that a network side has buffered downlink data for the terminal device, and the identification information carries a device identity of the network device; and
a sending unit 920, configured to send a response message for the context request message to the first network device, where the response message is used by the first network device to obtain the downlink data.

The network device 900 provided in this embodiment of the present invention may be corresponding to the second network device described in the method 300. In addition, the modules or units in the network device 900 are respectively configured to perform the actions or the processing processes performed by the second network device in the method 300. For brevity, details are not described herein again.

It should be understood that in this embodiment, the network device 900 is presented in a form of a functional unit. The "unit" herein may be an application-specific integrated circuit (application-specific integrated circuit, ASIC), a circuit, a processor and a memory that execute one or more software or firmware programs, an integrated logic circuit, and/or another component that can provide the foregoing functions. In a simple embodiment, a person skilled in the art may figure out that the network device 900 may be in a form shown in FIG. 2. The receiving unit 910 and the sending unit 920 may be implemented by using the processor and the memory in FIG. 2. Specifically, the processor executes a computer program stored in the memory to implement a function of the processor.

The downlink data sending methods provided in the embodiments of the present invention are described above in detail with reference to FIG. 1 to FIG. 7. A first network device and a second network device in the embodiments of the present invention are described below with reference to FIG. 10 and FIG. 11.

FIG. 10 is a schematic block diagram of a user plane device 1000 according to an embodiment of the present invention. As shown in FIG. 10, the user plane device 1000 includes:
a receiving unit 1100, configured to receive a data forwarding tunnel establishment request sent by a first network device, where the data forwarding tunnel establishment request is sent by the first network device to the user plane device after the first network device receives first indication information sent by a second network device, and the first indication information is used to indicate that a network side has buffered downlink data for a terminal device;
a processing unit 1200, configured to establish a data forwarding tunnel; and
a sending unit 1300, configured to send, to the first network device, a tunnel identifier of the data forwarding tunnel established by the processing unit, so that the first network device sends the tunnel identifier to the second network device, and the second network device sends the tunnel identifier to a second user plane device, where the second user plane device is a user plane device exclusive to the second network device.

The receiving unit 1100 is further configured to receive the downlink data sent by the second user plane device by using the data forwarding tunnel.

The sending unit 1300 is further configured to send the downlink data to the terminal device.

The user plane device 1000 provided in this embodiment of the present invention may be corresponding to the first user plane device described in the method 400. In addition, the modules or units in the user plane device 1000 are respectively configured to perform the actions or the processing processes performed by the first user plane device in the method 400. For brevity, details are not described herein again.

It should be understood that in this embodiment, the user plane device 1000 is presented in a form of a functional unit. The "unit" herein may be an application-specific integrated circuit (application-specific integrated circuit, ASIC), a circuit, a processor and a memory that execute one or more software or firmware programs, an integrated logic circuit, and/or another component that can provide the foregoing functions. In a simple embodiment, a person skilled in the art may figure out that the mobility management network element, that is, the user plane device 1000, may be in a form shown in FIG. 2. The receiving unit 1100 and the sending unit 1300 may be implemented by using the processor and the memory in FIG. 2. Specifically, the processor executes a computer program stored in the memory to implement a function of the processor.

FIG. 11 is a schematic block diagram of a user plane device 2000 according to an embodiment of the present invention. As shown in FIG. 11, the user plane device 2000 includes:
a receiving unit 2100, configured to receive a tunnel identifier sent by a second network device, where the tunnel identifier is sent by a first network device to the second network device after the second network device sends first indication information to the first network device, the first indication information is used to indicate that a network side has buffered downlink data for a terminal device, the tunnel identifier is used to identify a data forwarding tunnel established by a first user plane device, the data forwarding tunnel is used to forward the downlink data for the terminal device that is buffered on the network side, and the first user plane device is a user plane device exclusive to the first network device; and
a sending unit 2200, configured to send the downlink data to the first user plane device by using the data forwarding tunnel, so that the first user plane device sends the downlink data to the terminal device.

The user plane device 2000 provided in this embodiment of the present invention may be corresponding to the second user plane device described in the method 400. In addition, the modules or units in the user plane device 2000 are respectively configured to perform the actions or the processing processes performed by the first user plane device in the method 400. For brevity, details are not described herein again.

It should be understood that in this embodiment, the user plane device 2000 is presented in a form of a functional unit. The "unit" herein may be an application-specific integrated circuit (application-specific integrated circuit, ASIC), a circuit, a processor and a memory that execute one or more software or firmware programs, an integrated logic circuit, and/or another component that can provide the foregoing functions. In a simple embodiment, a person skilled in the art may figure out that the mobility management network element, that is, the user plane device 2000, may be in a form shown in FIG. 2. The receiving unit 2100 and the sending unit 2200 may be implemented by using the processor and the memory in FIG. 2. Specifically, the processor executes a computer program stored in the memory to implement a function of the processor.

It should be understood that sequence numbers of the foregoing processes do not mean execution sequences in the embodiments of the present invention. The execution sequences of the processes should be determined according to functions and internal logic of the processes, and should not be construed as any limitation to the implementation processes of the embodiments of the present invention.

A person of ordinary skill in the art may be aware that, in combination with the examples described in the embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A downlink data sending method, wherein the method comprises:
receiving, by a first network device, a first message sent by a terminal device, wherein the first message carries identification information of the terminal device;
determining, by the first network device based on the identification information, that a network side has buffered downlink data for the terminal device;
obtaining, by the first network device, the downlink data; and
sending, by the first network device, the downlink data to the terminal device.

2. The method according to claim 1, wherein the identification information is a temporary identity of the terminal device, and the temporary identity comprises a device identity of a second network device; and
the obtaining, by the first network device, the downlink data comprises:
sending, by the first network device, a context request message to the second network device based on the device identity;
receiving, by the first network device, a response message that is for the context request message and that is sent by the second network device, wherein the response message carries the downlink data; and
obtaining, by the first network device, the downlink data from the response message.

3. The method according to claim 1, wherein the identification information is a temporary identity of the terminal device, the temporary identity comprises a device identity of a second network device, and the downlink data is buffered in a user plane device shared by the first network device and the second network device; and
the obtaining, by the first network device, the downlink data comprises:
sending, by the first network device, a context request message to the second network device based on the device identity;
receiving, by the first network device, a response message that is for the context request message and that is sent by the second network device, wherein the response message carries first indication information, and the first indication information is used to indicate that the network side has the buffered downlink data for the terminal device; and
obtaining, by the first network device based on the first indication information, the downlink data from the user plane device shared by the first network device and the second network device.

4. The method according to claim 1, wherein the identification information is a permanent identity of the terminal device; and
the obtaining, by the first network device, the downlink data comprises:
sending, by the first network device, a location update request message to a subscriber data management;
receiving, by the first network device, second indication information and a device identity that are sent by the subscriber data management, wherein the second indication information is used to indicate that a second network device identified by the device identity buffers the downlink data for the terminal device; and
obtaining, by the first network device, the downlink data from the second network device based on the device identity.

5. The method according to claim 1, wherein before the receiving, by a first network device, a first message sent by a terminal device, the method further comprises:
receiving, by the first network device, the downlink data sent by a first user plane device, wherein the first user plane device is a user plane device exclusive to the first network device; and
buffering, by the first network device, the downlink data when the first network device determines that the terminal device is currently unreachable.

6. A downlink data sending method, wherein the method comprises:
receiving, by a second network device, a context request message sent by a first network device, wherein the context request message comprises identification information of a terminal device, and the identification information carries a device identity of the second network device; and
sending, by the second network device, a response message for the context request message to the first network device, wherein the response message is used by the first network device to obtain downlink data for the terminal device that is buffered on a network side.

7. The method according to claim 6, wherein the downlink data is buffered in the second network device, and the response message carries the downlink data, so that the first network device obtains the downlink data from the response message.

8. The method according to claim 6, wherein the downlink data is buffered in a user plane device of the second network device; and
before the sending, by the second network device, a response message to the first network device, the method further comprises:
obtaining, by the second network device, the downlink data from the user plane device.

9. The method according to claim 6, wherein the response message carries first indication information, and the first indication information is used to indicate that the downlink data is buffered in a user plane device shared by the first network device and the second network device, so that the first network device obtains, based on the first indication information, the downlink data from the user plane device shared by the first network device and the second network device, and sends the downlink data to the terminal device.

10. The method according to claim 6 or 7, wherein the method further comprises:
receiving, by the second network device, a registration request of the terminal device, wherein the registration request is used by the terminal device to request to register with a core network to which the second network device belongs, and the registration request carries type information of the terminal device and/or a service type requested by the terminal device;
generating, by the second network device, a buffer policy based on the type information of the terminal device and/or the service type requested by the terminal device; and
when the second network device receives the downlink data for the terminal device, buffering, by the second network device, the downlink data according to the buffer policy.

11. A downlink data sending method, wherein the method comprises:
receiving, by a first user plane device, a data forwarding tunnel establishment request sent by a first network device, wherein the data forwarding tunnel establishment request is sent by the first network device to the first user plane device after the first network device receives first indication information sent by a second network device, and the first indication information is used to indicate that a network side has buffered downlink data for a terminal device;
establishing, by the first user plane device, a data forwarding tunnel, and sending a tunnel identifier of the data forwarding tunnel to the first network device, so that the first network device sends the tunnel identifier to the second network device, and the second network device sends the tunnel identifier to a second user plane device, wherein the second user plane device is a user plane device exclusive to the second network device;
receiving, by the first user plane device, the downlink data sent by the second user plane device by using the data forwarding tunnel; and
sending, by the first user plane device, the downlink data to the terminal device.

12. A downlink data sending method, wherein the method comprises:
receiving, by a second user plane device, a tunnel identifier sent by a second network device, wherein the tunnel identifier is sent by a first network device to the second network device after the second network device sends first indication information to the first network device, the first indication information is used to indicate that a network side has buffered downlink data for a terminal device, the tunnel identifier is used to identify a data forwarding tunnel established by a first user plane device, the data forwarding tunnel is used to forward the downlink data, and the first user plane device is a user plane device exclusive to the first network device; and
sending, by the second user plane device, the downlink data to the first user plane device by using the data forwarding tunnel, so that the first user plane device sends the downlink data to the terminal device.

13. A network device, comprising:
a receiving unit, configured to receive a first message sent by a terminal device, wherein the first message carries identification information of the terminal device;
a processing unit, configured to determine, based on the identification information, that a network side has buffered downlink data for the terminal device, wherein
the processing unit is further configured to obtain the downlink data; and
a sending unit, configured to send, to the terminal device, the downlink data obtained by the processing unit.

14. The network device according to claim 13, wherein the identification information is a temporary identity of the terminal device, and the temporary identity comprises a device identity of a second network device;
the sending unit is specifically configured to send a context request message to the second network device based on the device identity;
the receiving unit is specifically configured to receive a response message that is for the context request message and that is sent by the second network device, wherein the response message carries the downlink data; and
the processing unit is specifically configured to obtain the downlink data from the response message.

15. The network device according to claim 13, wherein the identification information is a temporary identity of the terminal device, the temporary identity comprises a device identity of a second network device, and the downlink data is buffered in a user plane device shared by the first network device and the second network device;
the sending unit is specifically configured to send a context request message to the second network device based on the device identity;
the receiving unit is specifically configured to receive a response message that is for the context request message and that is sent by the second network device, wherein the response message carries first indication information, and the first indication information is used to indicate that the network side has the buffered downlink data for the terminal device; and
the processing unit is specifically configured to obtain, based on the first indication information, the downlink data from the user plane device shared by the first network device and the second network device.

16. The network device according to claim 13, wherein the identification information is a permanent identity of the terminal device;
the sending unit is specifically configured to send a location update request message to a subscriber data management;
the receiving unit is specifically configured to receive second indication information and a device identity that are sent by the subscriber data management, wherein the second indication information is used to indicate that a second network device identified by the device identity buffers the downlink data for the terminal device; and
the processing unit is specifically configured to obtain the downlink data from the second network device based on the device identity.

17. The network device according to claim 13, wherein before receiving the first message sent by the terminal device, the receiving unit is further configured to receive the downlink data sent by a first user plane device, wherein the first user plane device is a user plane device exclusive to the first network device; and
the processing unit is further configured to buffer the downlink data when determining that the terminal device is currently unreachable.

18. A network device, comprising:
a receiving unit, configured to receive a context request message sent by a first network device, wherein the context request message comprises identification information of a terminal device, and the identification information carries a device identity of the network device; and
a sending unit, configured to send a response message for the context request message to the first network device, wherein the response message is used by the first network device to obtain downlink data for the terminal device that is buffered on a network side.

19. The network device according to claim 18, wherein the downlink data is buffered in the network device, and the response message carries the downlink data, so that the first network device obtains the downlink data from the response message.

20. The network device according to claim 18, wherein the downlink data is buffered in a user plane device of the network device; and
the network device further comprises:
a processing unit, configured to obtain the downlink data from the user plane device before the sending unit sends the response message to the first network device.

21. The network device according to claim 18, wherein the response message carries first indication information, and the first indication information is used to indicate that the downlink data is buffered in a user plane device shared by the first network device and the network device, so that the first network device obtains, based on the first indication information, the downlink data from the user plane device shared by the first network device and the network device, and sends the downlink data to the terminal device.

22. The network device according to claim 18 or 19, wherein the receiving unit is further configured to receive a registration request of the terminal device, wherein the registration request is used by the terminal device to request to register with a core network to which the network device belongs, and the registration request carries type information of the terminal device and/or a service type requested by the terminal device;
the network device further comprises:
a processing unit, configured to generate a buffer policy based on the type information of the terminal device and/or the service type requested by the terminal device; and
when the receiving unit receives the downlink data for the terminal device, the processing unit is further configured to buffer the downlink data according to the buffer policy.

23. A user plane device, comprising:
a receiving unit, configured to receive a data forwarding tunnel establishment request sent by a first network device, wherein the data forwarding tunnel establishment request is sent by the first network device to the user plane device after the first network device receives first indication information sent by a second network device, and the first indication information is used to indicate that a network side has buffered downlink data for a terminal device;
a processing unit, configured to establish a data forwarding tunnel; and
a sending unit, configured to send, to the first network device, a tunnel identifier of the data forwarding tunnel established by the processing unit, so that the first network device sends the tunnel identifier to the second network device, and the second network device sends the tunnel identifier to a second user plane device, wherein the second user plane device is a user plane device exclusive to the second network device, wherein
the receiving unit is further configured to receive the downlink data sent by the second user plane device by using the data forwarding tunnel; and
the sending unit is configured to send the downlink data to the terminal device.

24. A user plane device, comprising:
a receiving unit, configured to receive a tunnel identifier sent by a second network device, wherein the tunnel identifier is sent by a first network device to the second network device after the second network device sends first indication information to the first network device, the first indication information is used to indicate that a network side has buffered downlink data for a terminal device, the tunnel identifier is used to identify a data forwarding tunnel established by a first user plane device, the data forwarding tunnel is used to forward the downlink data, and the first user plane device is a user plane device exclusive to the first network device; and
a sending unit, configured to send the downlink data to the first user plane device by using the data forwarding tunnel, so that the first user plane device sends the downlink data to the terminal device.
